# EUROPEAN PATENT APPLICATION

(11) **EP 1 612 429 A2**
(43) Date of publication of application: **04.01.2006**
(21) Application number: 05253651.3
(22) Date of filing: 14.06.2005
(51) Int. Cl.: F15C 5/00

(54) **Microfluidic flow modulation device**

(30) Priority: 30.06.2004 US 883585
(71) Applicant: Lifescan Scotland Ltd, Inverness IV2 3ED (GB)
(72) Inventor: Böhm, Sebastian, Inverness IV2 4DP (GB); McNeilage, Alan Watson, Inverness IV3 8LZ (GB)
(74) Representative: Tunstall, Christopher Stephen

(57) **Abstract**

Devices and kits for modulating the flow of a liquid including a flow modulation pathway (10) having a hydrophobic region (50) in contact with a capillary passage (35) that includes at least one stepped-down junction (36a,36b) are provided.

## Description

### BACKGROUND OF THE INVENTION

Valves are used in a variety of applications in which it is desirable to control the flow of liquid along a liquid flow path. For example, valves are used to control liquid flow in pharmaceutical applications, biotechnology applications, life sciences applications, biomedical applications, public health applications, agriculture applications, etc.

Depending on the system and flow volumes, valves may range in size from very large to very small. For example, one application in which valves are employed is the area of microfluidics, which broadly refers to technologies that control the flow of minute amounts of liquids in miniaturized systems. For example, microfluidic devices for the sampling and analysis of biological liquids requires miniature valves to control liquid flow in the device. Conventional valves used in microfluidic devices may be complex, which complexity may increase manufacturing costs the risk of valve failure. Furthermore, the pressure required to initiate flow passed the valve (i.e., the burst pressure) is relatively low, rendering them ineffective for many applications.

There is still a need for the development of effective valves for a variety of applications, including microfluidic devices. Of particular interest is the development of valves that do not substantially increase device complexity or cost, for example valves which do not require moving parts.

### SUMMARY OF THE INVENTION

Devices for modulating the flow of a liquid are provided. Embodiments of the subject devices include a flow modulation pathway having a hydrophobic region in contact with a capillary passage that includes at least one stepped-down junction. In certain embodiments, a subject device may be formed by two contacted substrates and the capillary passage provided therebetween. In certain embodiments, the capillary passage may be formed by a trench in one or more of the substrates. In certain embodiments, the capillary passage may be formed by a spacer present between the two substrates. Embodiments of the subject invention may also include sharp edges at one or more stepped-down junction. Also provided are kits that include a subject device.

### BRIEF DESCRIPTIONS OF THE DRAWINGS

Fig. 1 is a perspective view of an enhanced capillary valve according to an embodiment of the present invention.

Fig. 2 is a cross sectional view of the enhanced capillary valve that is illustrated in Fig. 1 along section line 2-2.

Fig. 3 is a cross sectional view of the enhanced capillary valve that is illustrated in Fig. 1 along section line 3-3.

Fig. 4 is a perspective assembly view of an alternative embodiment of an enhanced capillary valve according to the present invention.

Fig. 5 is a perspective assembly view of an additional alternative embodiment of an enhanced capillary valve according to the present invention.

Fig. 6 is a cross sectional view of the enhanced capillary valve that is illustrated in Fig. 5, along section line 6-6.

Fig. 7 is a cross sectional view of the enhanced capillary valve that is illustrated in Fig. 5 along section line 7-7.

### DETAILED DESCRIPTION OF THE INVENTION

Devices for modulating the flow of a liquid are provided. Embodiments of the subject devices include a flow modulation pathway having a hydrophobic region in contact with a capillary passage that includes at least one stepped-down junction. In certain embodiments, a subject device may be formed by two contacted substrates and the capillary passage provided therebetween. In certain embodiments, the capillary passage may be formed by a trench in one or more of the substrates. In certain embodiments, the capillary passage may be formed by a spacer present between the two substrates. Embodiments of the subject invention may also include sharp edges at one or more stepped-down junction. Also provided are kits that include a subject device.

Before the present invention is described, it is to be understood that this invention is not limited to particular embodiments described, as such may, of course, vary. It is also to be understood that the terminology used herein is for the purpose of describing particular embodiments only, and is not intended to be limiting, since the scope of the present invention will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range is encompassed within the invention. The upper and lower limits of these smaller ranges may independently be included in the smaller ranges is also encompassed within the invention, subject to any specifically excluded limit in the stated range. Where the stated range includes one or both of the limits, ranges excluding either or both of those included limits are also included in the invention.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, the preferred methods and materials are now described. All publications mentioned herein are incorporated herein by reference to disclose and describe the methods and/or materials in connection with which the publications are cited.

It must be noted that as used herein and in the appended claims, the singular forms "a", "an", and "the" include plural referents unless the context clearly dictates otherwise.

When two or more items (for example, elements or processes) are referenced by an alternative "or", this indicates that either could be present separately or any combination of them could be present together except where the presence of one necessarily excludes the other or others.

It will also be appreciated that throughout the present application, that words such as "top", "bottom" "front", "back", "upper", and "lower" and analogous terms are used in a relative sense only.

The publications discussed herein are provided solely for their disclosure prior to the filing date of the present application. Nothing herein is to be construed as an admission that the present invention is not entitled to antedate such publication by virtue of prior invention. Further, the dates of publication provided may be different from the actual publication dates which may need to be independently confirmed.

As will be apparent to those of skill in the art upon reading this disclosure, each of the individual embodiments described and illustrated herein has discrete components and features which may be readily separated from or combined with the features of any of the other several embodiments without departing from the scope or spirit of the present invention.

The figures shown herein are not necessarily drawn to scale, with some components and features being exaggerated for clarity.

### DEVICES

As summarized above, the subject invention includes devices for controlling liquid flow in a flow pathway. More specifically, embodiments of the subject devices include enhanced capillary valves for modulating (e.g., controllably stopping and starting) liquid flow in a flow path. The capillary valves of the subject invention may be adapted for use in a variety of different applications, devices and systems in which it is desired to modulate the flow of a liquid in a flow path having capillary dimensions.

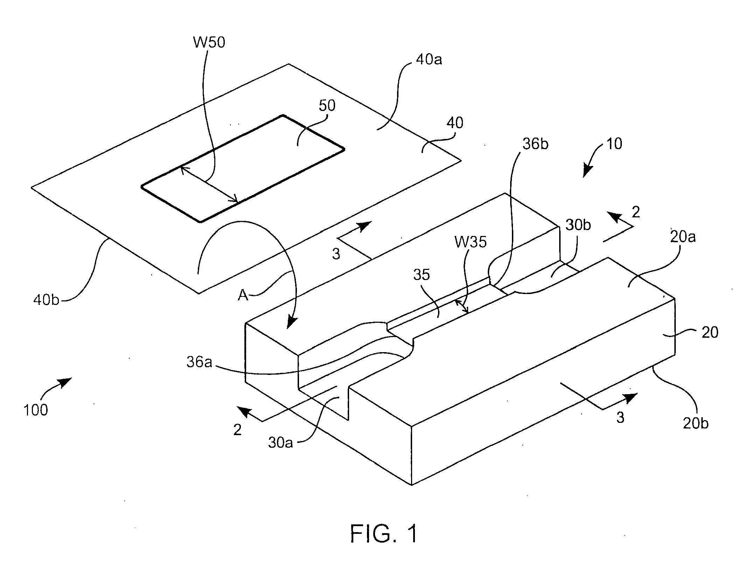

The enhanced capillary valves, illustrated in Figs. 1 through 7, may be employed to control the flow of biological fluids in a flow pathway of a device, e.g., a device that contains microchannels. Such devices may include liquid processing features for measuring and/or analyzing or otherwise evaluating one or more aspects of a liquid introduced to the device. The subject invention is suitable for a variety of different chemical, physical and/or biological analyses or measurement apparatuses and technologies that employ a liquid phase. For example, the subject capillary valves may be employed and/or adapted for use with any chemical, physical and/or biological technology that employs a liquid to process, separate and/or analyze at least one constituent of interest present in, or at least suspected of being present in, the liquid.

The subject capillary valves may be employed to modulate the flow of a variety of organic and inorganic liquids as will be apparent to those of skill in the art. It is to be understood that the subject invention is not limited to any particular liquid or type of liquid. The liquids may be naturally occurring or synthetic, and may be pre-processed or otherwise manipulated prior to use with the subject devices. That is, a wide variety of liquids may be processed (e.g., measured, detected, separated, analyze, and the like) according to the subject invention, where liquids include, but are not limited to, whole blood, interstitial liquid, plasma, buffer or buffer-containing sample, etc. For example, a sample of whole blood, interstitial liquid, plasma, cell suspensions, protein solutions, serum, urine, tears, water, buffer or buffer-containing liquid, and the like, may be contacted with a subject device and the flow thereof modulated using an enhanced capillary valve of the subject invention.

The size of a given device may vary widely depending on the particular analytical protocol performed and, as such, may include small scale or miniaturized devices known in the art. The flow modulation valves of the subject invention are capillary valves and as such include one or more liquid flow paths dimensioned to transport submicroliter, nanoliter and even picoliter amounts of liquid. Such devices may be characterized as microfluidic devices such that they include one or more pathways or channels of extremely small or microfluidic dimensions. By "microfluidic" is meant that the device includes one or more liquid pathways or channels, conduits, or reservoirs that has at least one dimension, e.g., depth, width, length, etc., that ranges from about 5 microns to about 2500 microns. In certain embodiments, all of the liquid pathways may be so dimensioned. A liquid pathway of the subject invention may have a depth that ranges from about 5 micrometers to about 1000 micrometers, e.g., from about 50 micrometers to about 250 micrometers, and/or a width that may range from about 10 micrometers to about 1000 micrometers, e.g., from about 50 micrometers to about 250 micrometers, and/or a length that may range from about 50 micrometers to about many centimeters or more. Exemplary microfluidic and other devices that may be adapted for use with the subject invention are described, e.g., in international publication no. WO 02/49507, as well as US application serial nos. 10/143,253 and 60/558,375, and , filed March 31, 2004 and entitled "Triggerable Passive Valves", attorney docket no. DDI-5043, the disclosures of which are herein incorporated by reference.

The subject devices may be constructed from one or more substrates, as will be described in greater detail below. For example, a device may be constructed from a single substrate having one of more trenches formed therein to provide one or more flow pathways such as capillary passages. In many embodiments, the devices may be constructed from two substrates operatively positioned relative to each other and one or more pathways such as capillary passages may be provided therebetween, e.g., formed by trenches in one or more of the substrates or formed by wall members sandwiched between the two substrates.

The one or more substrates that provide the foundation for the devices of the subject invention, at least in so far with respect to the subject valves, may be planar substrates, but may be non-planar in certain embodiments. In certain embodiments, the one or more substrates may include surface modifications, structures, and the like such as ridges, ledges, bumps, etc., which may provide some or all of a flow pathway and/or facilitate flow. In certain embodiments, a substrate may include one or more ports or bores that traverse the thickness of the substrate and which may be positioned to be aligned with, or more specifically in communication with, a pathway such as a liquid inlet channel, capillary passage, etc. Ports may be configured to provide access points for the introduction of liquids to a respective flow pathway. Ports, if provided, may be resealable ports, e.g., self-sealing, so as to minimize contamination of the liquids introduced to the interior of the device from the exterior environment of the device.

The material of a given substrate may be chosen to be compatible with the particular chemical or biochemical process to which a device is intended to be subjected, e.g., compatible with the conditions thereof such as pH, temperature, reagents (if present), etc. Materials of interest that may be employed in the construction of one or more of the substrates include, but are not limited to, silica-based substrates such as glass, ceramic, quartz, silicon or polysilicon, and the like; metals, e.g., aluminum, stainless steel, and the like; and polymeric materials such as thermoplastics and the like, e.g., such as ABS (acrylonitrile-butadiene-styrene copolymer), polysulfone, polystyrene, polymnethylpentene, polypropylene, polyethylene, polymethylmethacrylate (PMMA), polyvinylchloride (PVC), polyvinylidine fluoride, polydimethylsiloxane (PDMS), polycarbonate, polytetrafluoroethylene (TEFLON®), polyurethane, polyfluorcarbons, polyimide, polyester, polyamides, acrylic, polyether, polyolefin, and the like, and mixtures thereof. The substrates of the subject invention may be a composites, a laminate, etc. A "composite" is a composition comprised of different materials. The composite may be a block composite, e.g., an A-B-A block composite, an A-B-C block composite, or the like. Alternatively, the composite may be a heterogeneous, i.e., in which the materials are distinct or in separate phases, or homogeneous combination of different materials. As used herein, the term "composite" is used to include a "laminate" composite. A "laminate" refers to a composite material formed from several different bonded layers of the same or different materials.

The subject devices, and in particular the flow control area of a device, may be fabricated using any suitable method, such as, but not limited to, injection molding, extrusion or may be formed from cast plastic films, and the like. In embodiments that employ two contacted substrates, one or both of the substrates may be injected molded from a suitable thermoplastic polymer or the like and/or one or both of the substrates may be an extruded or cast plastic film.

As noted above, in certain embodiments, a flow pathway, e.g., the at least one valved capillary passage, may be provided by forming a trench in a surface of one or more of the substrates. Any suitable technique may be employed for this task, including, but not limited to, photolithography, deep reactive ion etching ("DRIE"), microreplication, electroforming, thermoforming, laser ablation, air abrasion, wet chemical etching, embossing, casting, imprinting, injection molding and the like. In certain embodiments the at least one valved capillary passage may be provided by a die cut adhesive film. In certain embodiments, a flow pathway, e.g., the at least one valved capillary passage, may include one substrate which may be silicon or the like with one or more etched flow pathways and another substrate which may be glass or the like- which may or may not include etched pathways.

Turning now to the figures, Fig. 1 is a perspective view of a device 100 that includes a flow modulation pathway 10 (also referred to as an enhanced capillary valve or flow control area) according to the present invention. Capillary valve 10 includes a substrate 20 with capillary passage 35. Passage 35 is fluidly connected to an inlet channel 30a and to an outlet channel 30b at stepped-down junctions 36a and 36b, respectively. Substrate 40 is shown separated from substrate 20, however in use substrate 40 overlays substrate 20 in a manner to contact a surface of substrate 20 as shown by arrow A. In this manner, substrate 40 is stably associated with substrate 20 or rather is maintained in a fixed overlaying position relative to substrate 20.

Substrate 40 may be maintained in an operatively contacted positioned relative to substrate 20 using in any suitable manner, e.g., one or more of adhesives such as adhesives well known in the art of bonding polymers, ceramics, glass, metal, composites, laminates, and the like may be used, e.g., pressure sensitive adhesives and the like; welding such as ultrasonic welding and the like; mechanical clamps or clips, tension springs, positioning pins, or associated clamping apparatus and the like, may also be employed. For convenience, substrate 20 is primarily described as the "bottom" substrate and a substrate associated therewith such as substrate 40 is primarily described as a "cover" or a "top" substrate. In the present application, unless a contrary intention appears, terms such as "cover", "top", "bottom" "front", "back" and analogous terms are used in a relative sense only.

As shown, cover 40 includes optional hydrophobic region 50 on the side that faces substrate 20. The subject invention is further primarily described having valves with a hydrophobic region, where such is for exemplary purposes only and in no way intended to limit the scope of the invention. It will be apparent that valves that do not have a hydrophobic region are contemplated by the subject invention. The side of cover 40 that faces substrate 20 is indicated as surface 40a (surface 40b is opposite thereto) of cover 40. When surface 40a is contacted with surface 20a (surface 20b is opposite thereto) of substrate 20, hydrophobic region 50 forms at least a portion of inlet channel 30a, outlet channel 30b, and capillary passage 35. In this particular embodiment, hydrophobic portion 50 is positioned about the entire top or upper portion of passage 35 and extends past passage 35 to inlet 30a and outlet 30b.

In certain embodiments, cover 40 may be a thin film (e.g., having a thickness on the order of about tens of micrometers in certain embodiments), which film may be laminated using, e.g., heat, on top of substrate 20. Other technologies that may be employed are described herein and include, as noted herein, adhesive bonding, ultrasonic welding, (capillary) gluing, pressing, and the like.

In use, liquid may be introduced, and flowed through, inlet channel 30a and capillary passage 35. Liquid flow is effectively stopped at the interface of capillary passage 35 and outlet channel 30b at stepped-down junction 36b.

In regards to the liquid entry from inlet channel 30a to capillary passage 35, flow may be slowed down, or even be stopped at stepped-down junction 36a. At junction 36a, flow may continue due to the continuous surface provided by passage 35. In such embodiments, a hydrophobic surface may be provided on top of the flow path and a hydrophilic surface may be provided on the bottom of the flow path, thus enabling at least some continuance of liquid flow. At junction 36b, however, the hydrophilic surface at capillary passage 35 stops, providing only a hydrophobic surface on top of the passageway for flow. Such a configuration is particularly well-suited for stopping liquid flow. Accordingly, embodiments may include transition 36a which may assist in at least slowing down flow of a liquid, but transition 36a is optional in certain embodiments, e.g., may not be present in certain embodiments that include 36b.

In order to achieve maximal stopping characteristics, capillary dimensions are small, effectively resulting in a small area of the liquid's meniscus formed. In many embodiments, this may be realized by reducing the height of the channel (Fig. 1-3, Fig.5-7) to values in the order of a few tens of micrometers. Although the width might be larger (e.g., hundreds of micrometers), the resulting burst pressure remains high as the reduced channel height defines the burst pressure. In order to allow liquid to freely flow up to the valve and after bursting through the valve section, the flow resistance of the system is suitably limited. This may be achieved by having the connecting channels relatively large (low resistance), whilst the valve itself has reduced cross-sections (high resistance).

A stepped-down junction may be abrupt or gradual, but in any event is configured to provide a depth transition between a leading edge of the capillary passage and the inlet channel and/or outlet channel. In many embodiments, a stepped-down junction is abrupt. The transition is characterized by a flow pathway depth at the capillary passage-facing side of the junction which differs from the depth at the sides of the junctions that face inlet channel 30a and outlet channel 34b.

As noted above, continual flow of liquid from passage 35 into outlet channel 30b is prevented due to the liquid interface formed between capillary passage 35, outlet channel 30b, hydrophobic region 50, and the atmosphere. At the liquid interface, due to the novel configuration of the subject valve, a meniscus is formed that resists flow, until a pressure (i.e., a burst pressure) is generated in the liquid that exceeds the backpressure of the meniscus of the liquid. In valves that do not include a hydrophobic area 50, there is a tendency for liquid to flow beyond the interface of capillary passage 35 and outlet channel 30b, decreasing the ability of the meniscus to stop flow. Employing hydrophobic region 50 functions to stop flow beyond the interface formed between capillary passage 35 and outlet channel 30b until time when a sufficient force is applied thereto to overcome the backpressure of the meniscus. The stopping and starting of flow may be accomplished manually or automatically with the aid of suitable componentry for actuating valves and the like. For example, a processor may be programmed to perform all of the steps required of it to start and stop flow of liquid in a pathway at appropriate times, e.g., according to a timing scheme for analyte concentration determination and the like. For example, in certain embodiments in which a valve of the subject invention is used in an analyte determination assay, for example incorporated into a microfluidic device having a reaction chamber or sensor region for determining analyte concentration, analyte measurements may be sensitive to flow. For example, in the case of electrochemical glucose measurement, measurements may be sensitive to flow. In most electrochemically based glucose sensors, glucose is a limiting reactant species. In the case where a glucose measurement is being attempted on a sample that is flowing, glucose is present in excess, and is not a limiting reactant species. This is problematic when correlating current to glucose concentration in the liquid. Accordingly, it may be desirable for measurements to be made when the sample has stopped flowing and thus the subject valves may be employed. Flow of sample may be started and stopped, e.g., repeatedly, by actuating and not actuating a subject valve (e.g., by applying a pressure to the liquid) either manually or automatically.

Hydrophobic region 50, as illustrated in Figs. 1 through 7, is especially useful when attempting to modulate or control liquid flow in a flow pathway provided by two planar parts contacted together. In embodiments that employ two planar parts contacted together with a flow pathway therebetween, it is particularly difficult to align geometric features between parts. Misalignment may lead to the formation of unintended small channels that may cause undesirable flow by way of capillary action, beyond a meniscus. Accordingly, hydrophobic regions provided about at least a portion of capillary passage 35 between two planar parts could stop the unintentional flow of liquid.

As noted above, the dimensions of valved flow pathways may vary. Flow pathways that include a capillary passage, a hydrophobic region and at least one stepped-down junction are dimensioned to have capillary dimensions. For example, in certain embodiments the width of capillary passage 35 may range from about 5 microns to about 1000 microns, e.g.; from about 50 microns to about 500 microns, e.g., from about 100 microns to about 300 microns. The depth of capillary passage 35 may range from about 5 microns to about 500 microns, e.g., from about 10microns to about 100 microns. The liquid volume capacity of capillary passage 35 may vary depending on the length of the passage, which may be any suitable length and is not limited according to the subject invention. In certain embodiments, the length of capillary passage 35 may range from about 10 micrometers to about 1000 micrometers, e.g., from about 100 micrometers to about 750 micrometers, e.g., from about 200 micrometers to about 500 micrometers. Capillary passages having dimensions that fall within the ranges provided above may have a liquid volume capacity that ranges from about 2.5 x 10⁻⁷ microliters to about 0.5 microliters, e.g., from about 5 10⁻⁵ microliters to about 0.0375 microliters.

A capillary passage of the subject invention may have any suitable cross-sectional geometry, e.g., may be rectangular, square, circular, semicircular, and the like, in cross section. In certain embodiments, a capillary passage may be rectangular in cross section, which may facilitate the fabrication of the passage. For example, in the case of injection molding, a capillary passage having a rectangular cross section makes fabrication of the mold easier (molds may be milled straightforwardly), and helps the mold release from the parts during molding process.

As mentioned above, embodiments of flow modulation pathway 10 may also include at least one stepped-down junction 36. As shown in Fig. 1 stepped-down junctions 36a and 36b may be positioned at the interface of inlet channel 30a and capillary passage 35 and/or at the interface of outlet channel 30b and capillary passage 30b. Accordingly, embodiments include regions of varying depths. For example, embodiments include an inlet channel 30a and an outlet channel 30b that may be deeper than capillary passage 35, as shown in, e.g., Fig. 1. In certain embodiments, inlet channel 30a and outlet channel 30b may be at least about 1.5 times as deep as capillary passage 35, e.g., may be at least about twice as deep as capillary passage 35, e.g., may be between about 10 to about 100 times deeper than capillary passage 35 in certain embodiments. Inlet and outlet channels 30a and 30b need not be the same depth, but may be of the same depth in certain embodiments. This step change in depth at the one or more junctions 36 enhances the ability to stop liquid flow. Accordingly, a flow modulation pathway that includes both of hydrophobic region 50 and one or more stepped-down regions 36 are of interest. Such embodiments require high burst pressures to initiate flow of a liquid, once effectively stopped by the valve, into outlet channel 30a, thus providing an effective manner in which to modulate liquid flow in a liquid pathway.

The geometries of inlet channel and outlet channel may vary, and each may have any suitable cross-sectional geometry, e.g., rectangular, square, semicircular in cross section, and the like. In certain embodiments, an inlet channel and/or an outlet channel may be rectangular in cross section, which may facilitate in the fabrication thereof, as described above. Any of the geometries described above for capillary passage 35 may be employed for inlet channel 30a and/or outlet channel 30b. Inlet channel 30a and outlet channel 30b may have the same or different cross-section geometry.

Certain embodiments may include a plurality of stepped-down junctions in series. (See for example US patent no. 6,521,182, the disclosure of which is herein incorporated by reference.) For example, a flow path may include multiple capillary passageway/stepped-down junction segments in series, where analyte determination reaction chambers may be positioned between such segments. The spacing of multiple stepped-down junctions in series along a flow path permits a constant volume of analyte in a liquid to be repeatedly presented to a reaction chamber for a certain period of time. Such embodiments may be configured such that during the delay in flow of the liquid, the majority of analyte (such as glucose or the like) present in the liquid is consumed. Accordingly, in embodiments using electrochemical reaction cells for example, integrating the current measured during the static period provides a value proportional to glucose concentration in the analyte.

When assembled, hydrophobic region 50 may cover at least a portion of capillary passage 35, where in certain embodiments hydrophobic region 50 may cover at least the whole area of capillary passage 35 or at least the entire top or upper portion of capillary passage 35. In certain other embodiments, hydrophobic region 50 may be slightly larger in area than the area of capillary passage 35 so that hydrophobic region 50 may cover not only the whole top portion of capillary passage 35, but at least some portion of inlet channel 30a and/or at least some portion of outlet channel 30b. In certain embodiments, hydrophobic region 50 may be oversized such that the width W50 of hydrophobic region 50 may be greater than the width W35 of capillary passageway 35 such that when capillary forming surface 20a is operatively contacted with capillary forming surface 40a of substrate 40, hydrophobic region 50 may overlay not only the entire width dimension of capillary passage 35, but also at least a portion of the surface 20a that is adjacent the capillary passage. As noted above, this prevents unintentional liquid flow that may result from misalignment of the substrates.

Hydrophobic region 50 may be formed using any suitable method, where region 50 may be provided directly on surface 40a, e.g., printed, painted, sprayed, etc., directly thereon, or may be provided as a separate element which may then be affixed to surface 40a, e.g., using adhesive or the like. In certain embodiments, hydrophobic region 50 may be formed using commercially available hydrophobic inks, for example, the ink FluoroPel PFC MH (e.g., available from Cytonix Inc., of Beltsville, Maryland.). Various printing techniques that may be employed to print hydrophobic region 50 on a surface of a substrate include, but are not limited to, screen printing, gravure, slot coating, flexo, offset, and spray coating. When screen printed onto polyester, FluoroPel PFC MH forms a hydrophobic area having a contact angle with water of approximately 150 degrees. When characterizing the wettability of a surface, its contact angle with water is often measured. To do this, a drop of water is placed onto the surface, and the angle is measured between the surface and a line drawn tangent to the liquid drop. As a point of reference, completely hydrophobic material has a contact angle with water of 180 degrees. In addition, Cytonix offers hydrophobic ink formulations optimized for use with other types of printing, such as flexo and offset, as well as spray coating. Hydrophobic inks such as those used in printing microscope slides are also suitable for use in printing hydrophobic patches of the subject invention. Commercially available screen printing inks may be modified for use in printing a hydrophobic patch 50. For example, Zonyl fluoroadditives, available from DuPont Corporatation of Delaware, may be used as an additive to traditional screen printing inks.

In addition to hydrophobic region 50, some or all of surfaces 20a of substrate 20 and 40a of cover 40 may be hydrophilic or hydrophobic inherently or may be rendered as such and/or may include one or more other surface treatments. The term "surface treatment" is used broadly refer to preparation or modification of the surface of a substrate (i.e., the walls of a liquid pathway, etc.) for example to an area that will be in contact with a liquid and includes, but is not limited to, surface absorptions, surface adsorptions, absorptions; methods of coating surfaces, polishing, etching, and the like.

In embodiments in which surface 20a and/or 40a is hydrophilic, the contact angle of water upon the surface, e.g., if the surface is constructed of a polymer such as plastic, may be about 80 degrees or less. In their natural state (before any modification), the surface, e.g., if plastic, may have contact angles of about 80 degrees. The contact angle may be decreased to less than about 80 degrees, e.g., less than about 40 degrees, using any suitable method such as by way of plasma etching, corona etching, or by coating with a surfactant or other hydrophilic compound, and the like. In those embodiments in which in which surface 20a and/or 40a is hydrophobic, surface 20a and/or 40a may have contact angles of greater than about 80 degrees, and may be made hydrophobic by any suitable method such as compounding with hydrophobic materials, or by coating, spraying, or dipping with hydrophobic materials. In embodiments in which at least one of the surfaces is hydrophilic, the driving force for flow in the channels may, in part, be due to capillary action. In embodiments in which at least one of the surfaces is hydrophobic, other driving forces may be used to cause flow of liquid into the channels and passages. Other driving forces include, but are not limited to, capillary, gravitational, and centrifugal forces, pressurized gas, a pump, force applied to the liquid at its source, e.g., force may be applied to a liquid by pressure in dermal tissue when the sample is interstitial liquid, as noted above.

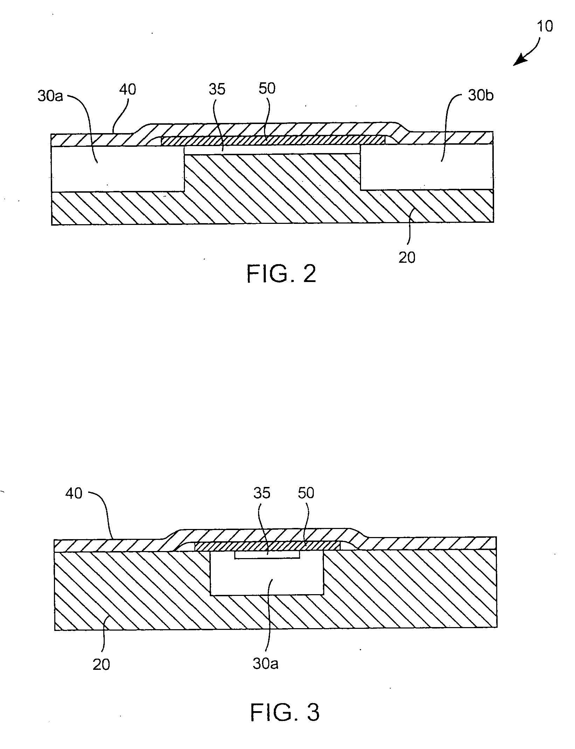

Fig. 2 is a cross sectional view of the capillary valve 10 that is illustrated in Fig. 1, along section line 2-2 and Fig. 3 is a cross sectional view of the capillary valve that is illustrated in Fig. 1, along section line 3-3. As can be seen, hydrophobic area 50 forms the top portion of capillary passage 35, helping to prevent flow beyond the interface between capillary passage 35 and outlet channel 30b. To make assembly of enhanced capillary valve 10 easier, hydrophobic area 50 may overlap inlet channel 30a and outlet channel 30b as described above, which overlap allows for imprecision in registration during assembly of substrate 20 and cover 40. As is illustrated in Figure 3, in this particular embodiment the depth of capillary passage 35 is much less than the depth of inlet channel 30a.

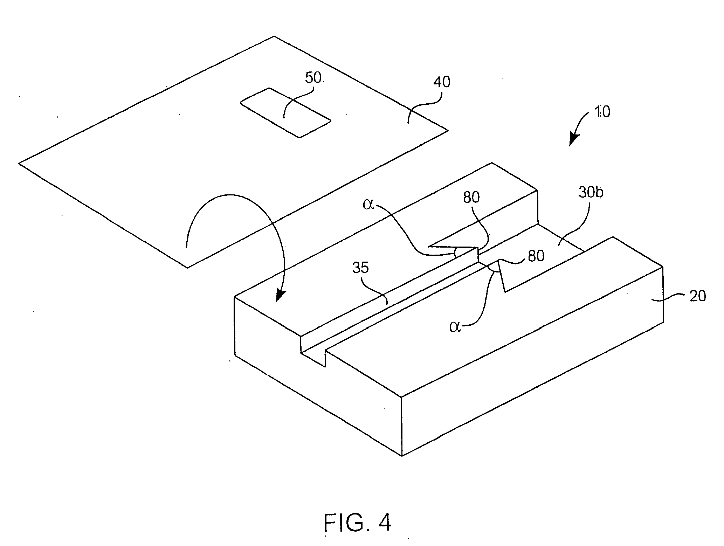

Fig. 4 is a perspective view of an embodiment of a device according to the invention in which capillary passage 35 is provided with a pair of sharp edges 80. When substrate 20 is assembled to cover 40, hydrophobic area 50 covers at least a portion of capillary passage 35, the sharp edges 80, and a portion of the outlet channel 30b. Sharp edges 80 increase the ability of capillary valve 10 to stop flow. The sharp edges help define the meniscus. When liquid flowing through capillary passage 35 reaches sharp edges 80, the liquid requires a greater amount of energy to flow beyond edges 80 as compared with embodiments having edges that are not sharp. Accordingly, certain embodiments include sharp edges 80 as well as hydrophobic region 50 and/or stepped-down junctions 36a and 36b. It is to be understood that a device need not include sharp edges 80 and hydrophobic region 50, but may include only sharp edges 80 or region 50 in certain embodiments.

Angles α of sharp edges 80 may vary, where an angle of less than about 90 degrees (as measured from the edge of channel 35) may be used in many embodiments. As described above, embodiments of the subject invention may be made using a wide variety of materials, with a wide variety of dimensions, and by using many different assembly processes. Injection molding for example is a method that may be employed to fabricate at least substrate 20, in that it lends itself to producing particularly sharp edges 80. Although not shown in Fig. 4, an inlet channel, as seen in Figs. 1 through 3, may be connected to capillary passage 35 on the end opposite the sharp edges 80.

In use, capillary valve 10 of Fig. 4 functions analogously to the embodiments of Figs. 1 through 3. Specifically, liquid flows through channel 35 to sharp edges 80, where flow stops as long as the backpressure provided at the interface exceeds the pressure of the liquid. To cause flow beyond sharp edges 80, the pressure of the sample liquid is increased to a point greater than the backpressure.

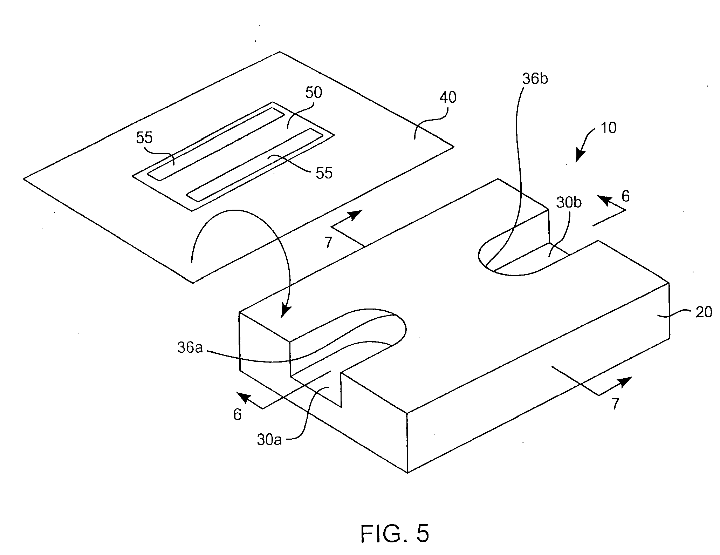

Fig. 5 is a perspective view of an exemplary embodiment of a capillary valve according to the invention and includes substrate 20, cover 40, inlet channel 30a, outlet channel 30b, hydrophobic area 50, and a pair of capillary passage wall-forming members 55 which provide the walls of a capillary passage when cover 40 is positioned to overlie substrate 20. Capillary passage wall-forming members 55 may be printed capillary channel walls. In certain embodiments, capillary passage wall-forming members 55 may be a free-floating or adhesive-backed, separable structure positionable between the substrates, i.e., not permanently affixed to a surface of a substrate. Hydrophobic area 50 and capillary passage wall-forming members 55 may be positioned on surface 40a of cover 40 which faces or rather is opposite surface 20a of substrate 20 when assembled. Capillary passage 35 connecting inlet channel 30a and outlet channel 30b may be formed when cover 40 is assembled to substrate 20 due to the thickness of the capillary passage wall-forming members 55.

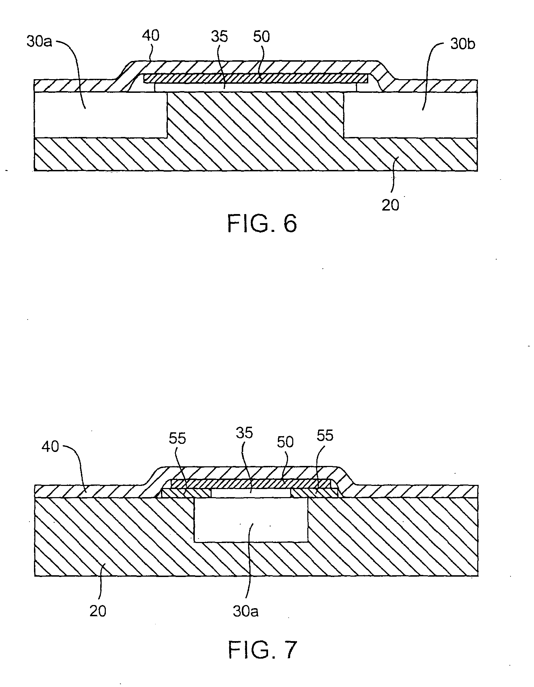

Capillary passage 35 of Fig. 5 may be seen in Figs. 6 and 7. In such embodiments, capillary passage 35 does not need to be formed in substrate 20 (or substrate 40) by a trench in substrate 20 (or 40), but rather may be provided by operatively positioned capillary passage wall-forming members 55. In embodiments in which substrate 20 (or 40) is injection molded, forming capillary passage 35 in substrate 20 (or 40) may be challenging, due to its shallow depth. In embodiments in which capillary passage 35 is formed using capillary passage wall-forming members 55, printing technologies, such as for example screen printing and the like, may be used. Printing capillary passage wall-forming members 55 on surface 20a enables capillary passages having depths that are extremely shallow, e.g., much shallower than if printing were not employed, and may even provide depths shallower than that which may be achieved by forming trenches in a substrate surface.

Fig. 6 is a cross sectional view of the capillary valve that is illustrated in Fig. 5 along section line 6-6. As can be seen in the figure, capillary passage 35 connects inlet channel 30a with outlet channel 30b. The depth of channel 35 is established by the thickness of capillary passage wall-forming members 55, which depth may be extremely shallow. Hydrophobic region 50 forms at least a portion of the top of capillary passage 35, and covers at least a portion of the tops of outlet channels 30a and 30b.

Fig. 7 is a cross sectional view of the enhanced capillary valve that is illustrated in Fig. 5, along section line 7-7. As can be seen, capillary passage wall-forming members 55 form the edges of capillary passage 35, while hydrophobic area 50 forms the top. In this embodiments, the height of capillary passage 35 is much less than the height of inlet channel 30a.

Capillary passage wall-forming members 55 may be formed using heat activated or pressure sensitive adhesives and the like, and may be applied using a wide variety of methods, including those described previously with respect to the hydrophobic area 50. In certain embodiments, capillary passage wall-forming members 55 may be hydrophobic, (e.g., adhesive wall-forming members).

In use, the enhanced capillary valve of Figs. 5, 6, and 7 functions analogously to the embodiments of Figs. 1 through 4. Specifically, sample enters at inlet channel 30a, and flows through channel 35, stopping at the interface between channel 35 and outlet channel 30b. Flow stops as long as the backpressure provided at the interface of the capillary passage and outlet channel exceeds the pressure of the liquid. To cause liquid to flow beyond the interface, the pressure of the liquid is increased to a level to overcome this backpressure, i.e., to a level greater than the backpressure.

The subject devices may include one or more optional components, e.g., which are known for use with microfluidic devices. Such optional components may be provided for analyte processing protocols (for example analyte detection protocols in which the presence and/or quantity of one or more analyte of a liquid sample may be determined). For example, analyte detection protocols may include the detection of and/or quantification of the amount of glucose in a biological fluid sample.

A device may include a suitable detector, operatively coupled to the device, for detecting one or more analytes of a liquid introduced to a device. Such detectors may be "on-line" or "on-chip" detectors such that a detector may be integral with a substrate of a device, e.g., positioned directly on or in a substrate. In certain embodiments, a suitable detector may be a separate component from a substrate of a device such that it may be "off-line" or "off-chip" (i.e., a detector may not be integral with the device but rather may be separated therefrom yet coupled to the device). Suitable detectors include, but are not limited to, fluorescent detectors, spectrophotometers, electrochemical detectors, mass spectrometers, UV-VIS detectors, refractive index detectors, etc. In certain embodiments, a detector may be operatively associated with an amplifier for amplifying a signal produced by the detector and also to a user display or readout for communicating or displaying the results of the detector to a user.

A detector may be in the form of an optical detection window disposed across one or more liquid pathways of the device. Optical detection windows may be transparent or opaque windows such that a user may view an optical signal from the liquid flow path via the detection window, e.g., in the case of optically based assays.

One or more other components, which may be integral to the device or separated a distance therefrom, but coupled thereto, such as one or more of, but not limited to, liquid introduction and/or liquid collecting reservoirs, pumps, filters, chambers, cavities, heaters, diffusers, nozzles, mixers, and the like, as are well known to those of skill in the art. For example, where one or more pumps are employed, any suitable pump(s) may be used, including, but not limited to, pneumatic pumps, syringe pumps, single piston pumps, rapid refill pumps, twin headed pumps, diaphragm pumps, reciprocating piston pump, constant pressure pump, and the like.

In certain embodiments, at least a portion of a liquid flow pathway may include an analytical portion or compartment or reaction chamber within which processing of a liquid (e.g., analyte detection and/or measurement) may be performed. An analytical portion or compartment or reaction chamber is used herein to refer to a region of a device in which sample processing may be carried out. Examples of functions which may be served by a reaction chamber include, but are not limited to, analyte detection, analyte measurement, chromatographic separations, electrophoretic separations, electrochromatographic separations, and the like.

A reaction chamber may be positioned in any suitable location of a flow pathways, e.g., may be positioned upstream or downstream from a subject valved capillary passage, e.g., may be positioned in liquid inlet channel 30a and/or liquid outlet channel 30b associated with capillary passage 35, or may be positioned upstream or downstream from inlet channel 30a and/or outlet channel 30b, as described above. In certain embodiments, more than one reaction chamber may be included in a device such as a microfluidic device that includes one or more valved capillary channels 35. For example, the subject valves may provide for controlled delivery of a sample such as interstitial fluid or the like to an analyte (e.g., glucose) reaction chamber of the device, which reaction chamber may be associated with inlet channel 30a and/or outlet channel 30b, or in any other suitable location along a main flow path or directly or indirectly off-of or adjacent to a main flow path. For example, a reaction chamber may be located directly in the flow path, or could be located in a side channel off the main path. In embodiments in which a reaction area is electrochemical in nature, the sensor may be located on one of the two substrates, or in certain embodiments an electrochemical sensor may have electrodes on both substrates in parallel.

In certain embodiments, capillary passage 35 may provide for accumulation of liquid from inlet channel 30a and liquid processing (e.g., analyte determination) may be performed in channel 30a or upstream from channel 30a on liquid that has accumulated and been stopped by valve 35 in accordance with the subject invention, e.g., analyte such as glucose may be measured electrochemically or optically in on liquid that has been stopped at capillary passage 35. Once an analyte measurement has been made, valve may then permit the stopped liquid to flow to another reaction chamber that may be positioned in outlet channel 30b or downstream therefrom. In this manner, flow of liquid may be stopped, processed at a reaction chamber, and flow initiated again to transport the liquid to another region where the liquid may be stopped, processed at another reaction chamber, and flow initiated again to transport the liquid to another region, etc.

As noted above, in certain embodiments it may be desirable to measure analyte in a liquid when the liquid has stopped flowing. Following any processing such as any analyte measurements at a reaction chamber, the flow of processed liquid may be initiated by providing a pressure to the stopped liquid (e.g., by actuating a pump in certain embodiments) and the liquid may be transported out of the capillary passage 35 and into outlet 30b such that outlet channel 30b may receive liquid after it has passed through a reaction chamber (and/or pass liquid to a reaction chamber). In this manner, outlet channel 30b may provide space for accumulation of processed liquid, such as where measurements have been made or where measurements are not desired. Liquid may be retained in outlet channel 30b or may be transported out of channel 30b to other channels and/or valved capillary passages, depending on the particular configuration of the device and desired applications.

In many embodiments, a sample processing region may include at least one component that facilitates the particular analysis. Any suitable analytical components(s), moiety or matrix may be employed depending on the particular protocol being performed. The subject invention may be employed in a variety of analytical tests of biological fluids, such as determining biochemical or hematological characteristics, or measuring the concentration in such fluids of analytes such as proteins, hormones, carbohydrates, lipids, drugs, toxins, gases, electrolytes, etc. For example, the subject invention may be employed with devices for determining the presence of and/or measuring the concentration of glucose in whole blood, plasma, serum, or interstitial fluid.

In certain embodiments, an analytical component may be a reagent or reagent system for analyte determination, e.g., an assay component or system. For example, a portion of a device may include a member of a particular binding pair, e.g., a ligand or receptor, antigen or antibody, nucleic acid for hybridization reactions, enzyme or receptor, etc. This portion may also include particular reactants or reagents such as analyte detection components, protein or nucleic acid digestive agents, surfactants, etc. In certain embodiments, analyte detection assay components may include members of a signal producing system.

Certain embodiments may include an electrochemical cell as a measurement element. A redox reagent system or material within the electrochemical cell may be provided between the electrodes, often called the reaction cell or chamber. Various types of electrochemical systems and methods commonly known in the art of analyte detection and measurement may be employed by the present invention, including systems that are amperometric (*i.e*., measure current), coulometric (*i.e*., measure electrical charge) or potentiometric (*i.e*., measure voltage). Examples of these types of electrochemical measurement systems, which may be adapted for use with the subject invention are further described, e.g., in U.S. Patent Nos.: 6,521,110; 6,475,360; 6,444,115; 6,620.310; 4,224,125; 4,545,382; and 5,266,179; as well as WO 97/18465 and WO 99/49307; the disclosures of which are herein incorporated by reference. The target analyte of the biological fluid present within the reaction chamber chemically reacts with the redox reagent system to produce an electrical signal measured by the electrodes from which the concentration of the target analyte may be derived. The particular redox reagent material used is selected based on the analyte targeted for measurement. Certain embodiments may also employ colorimetric or reflectance-type analyte measuring systems, where such reflectance systems may comprise a signal producing system. Examples of such systems that may be adapted for use with the subject invention may be found, e.g., in U.S. Patent Nos. 6,743,597; 6,656,697; 6,541,266; 6,531,322; 6,335,203; 6,312,888; 5,563,042; 5,563,031; 5,789,255 and 5,922,530, which are herein incorporated by reference in their entirety.

Embodiments include redox reagents systems that may be positioned in any suitable location of a subject device, i.e., in any flow pathway of a device. In certain embodiments, the enzyme component of the reagent may be an enzyme or a plurality of enzymes that work in concert to oxidize the analyte of interest. In other words, the enzyme component of the reagent system may be made up of a single analyte oxidizing enzyme or a collection of two or more enzymes that work in concert to oxidize the analyte of interest. Enzymes of interest include, but are not limited to, oxidases, dehydrogenases, lipases, kinases, diaphorases, quinoproteins and the like. The specific enzyme present in the reaction area depends on the particular analyte for which the electrochemical cell is designed to detect, where representative enzymes include, but are not limited to: glucose oxidase, glucose dehydrogenase, cholesterol esterase, cholesterol oxidase, lipoprotein lipase, glycerol kinase, glycerol-3-phosphate oxidase, lactate oxidase, lactate dehydrogenase, pyruvate oxidase, alcohol oxidase, bilirubin oxidase, uricase, and the like. In certain embodiments in which the analyte of interest is glucose, the enzyme component of the reagent system may be a glucose oxidizing enzyme (*e.g.*, a glucose oxidase or glucose dehydrogenase).

The second optional component of a redox reagent system is a mediator which is made up of one or more mediator agents. A variety of different mediator agents are known in the art and include, but are not limited to: ferricyanide, phenazine ethylsulphate, phenazine methylsulfate, phenylenediamine, 1-methoxy-phenazine methylsulfate, 2,6-dimethyl-1,4-benzoquinone, 2,5-dichloro-1,4-benzoquinone, ferrocene derivatives, osmium bipyridyl complexes, ruthenium complexes and the like. In embodiments in which glucose is the analyte of interest and glucose oxidase or glucose dehydrogenase are the enzyme components, mediator of ferricyanid may be employed. Other reagents that may be present in a reaction area include buffering agents, (*e.g.*, citraconate, citrate, phosphate), "Good" buffers and the like.

As noted above, in certain embodiments analyte determination may be accomplished by way of photometric or colorimetric assays and in this regard a reaction chamber may be characterized as an optical, colorimetric or photometric reaction chamber. In such, embodiments, one or more reagents for carrying-out these types of assays may be positioned in any suitable location of a subject device, i.e., in any flow pathway of a device. A signal producing system may be included in certain embodiments.

A signal producing system may be made up of a plurality of reagent components that produce a detectable product in the presence of an analyte of interest. The signal producing system may be an analyte oxidation signal producing system. By analyte oxidation signal producing system is meant that in generating the detectable signal from which the analyte concentration in the sample is derived, the analyte is oxidized by a suitable enzyme to produce an oxidized form of the analyte and a corresponding or proportional amount of hydrogen peroxide. The hydrogen peroxide is then employed, in turn, to generate the detectable product from one or more indicator compounds, e.g., dye couples, where the amount of detectable product produced by the signal producing system, i.e., the signal, is then related to the amount of analyte in the initial sample. As such, certain analyte oxidation signal producing systems may be characterized as hydrogen peroxide based signal producing systems or peroxide producing signal producing systems.

The hydrogen peroxide based signal producing systems may include an enzyme that oxidizes the analyte and produces a corresponding amount of hydrogen peroxide, where by corresponding amount is meant that the amount of hydrogen peroxide that is produced is proportional to the amount of analyte present in the sample. The specific nature of this first enzyme necessarily depends on the nature of the analyte being assayed but is generally an oxidase. As such, the enzyme may be: glucose oxidase (where the analyte is glucose); cholesterol oxidase (where the analyte is cholesterol); alcohol oxidase (where the analyte is alcohol); formaldehyde dehydrogenase (where the analyte is formaldehyde), glutamate oxidase (where the analyte is L-glutamic acid), glycerol oxidase (where the analyte is glycerol), galactose oxidase (where the analyte is galactose), a ketoamine oxidase (where the analyte is a glycated protein, *e.g.*, fructosamine), a 3-hydroxybutyrate dehydrogenase (where the analyte is a ketone body), L-ascorbate oxidase (where the analyte is ascorbic acid), lactate oxidase (where the analyte is lactic acid), leucine oxidase (where the analyte is leucine), malate oxidase (where the analyte is malic acid), pyruvate oxidase (where the analyte is pyruvic acid), urate oxidase (where the analyte is uric acid oxidase) and the like. Other oxidizing enzymes for use with these and other analytes of interest are known to those of skill in the art and may also be employed.

A signal producing systems also includes an enzyme that catalyzes the conversion of a dye substrate into a detectable product in the presence of hydrogen peroxide, where the amount of detectable product that is produced by this reaction is proportional to the amount of hydrogen peroxide that is present. This second enzyme is generally a peroxidase, where suitable peroxidases include: horseradish peroxidase (HRP), soy peroxidase, recombinantly produced peroxidase and synthetic analogs having peroxidative activity and the like. See e.g.*,* Ci *et al.* (1990) *Analytica Chimica Acta,* 233:299-302.

The dye substrates are oxidized by hydrogen peroxide in the presence of the peroxidase to produce a product that absorbs light in a predetermined wavelength range, *i*.*e*., an indicator dye. The indicator dye may absorb strongly at a wavelength different from that at which the sample or the testing reagent absorbs strongly. The oxidized form of the indicator may be the colored, faintly-colored, or colorless final product that evidences a change in color. That is to say, the testing reagent may indicate the presence of an analyte in a sample by a colored area being bleached or, alternatively, by a colorless area developing color. Examples of dye substrates of include, but are not limited to, ANS and MBTH or analogues thereof; MBTH-DMAB; AAP-CTA; and the like. See e.g., in U.S. Patent Nos. 5,922,530; 5,776,719; 5,563,031; 5,453,360 and 4,962,040; the disclosures of which are herein incorporated by reference.

### METHODS

Also provided by the subject invention are methods of modulating a liquid in a flow pathway. Embodiments of the subject invention provide a number of advantages, including precise control over flow of a liquid in a flow pathway. Embodiments of the subject methods include repeatedly stopping and starting flow of liquid in a flow pathway. In this manner, the flow of liquid in a fluidic circuit may be controlled. A feature of embodiments of the subject methods is that the flow modulation valves do not require any moving parts, thus reducing device complexity.

The subject methods employ the novel flow modulation pathways described above. In general, the subject methods include introducing liquid to a flow modulation pathway. The flow modulation pathway may include a hydrophobic region-containing capillary passage, whereby liquid is stopped at a stepped-down junction of the passage. Embodiments include applying a pressure to the stopped liquid to cause the liquid to flow passed the stepped-down junction. Such may be repeated one or more times to repeatedly stop and start liquid flow in a flow pathway. This may be achieved in certain embodiments by employing a serial configuration of capillary stops. Liquid may be stopped at a capillary stop, then pressure may be applied to burst the liquid through this stop, then the liquid flows and stops at the consecutive stop downstream the flow path.

A step of embodiments of the subject methods includes contacting a liquid with a device that includes a hydrophobic region containing-capillary passage that include at least one stepped-down region, and in particular a flow pathway of such a device. The liquid may be any suitable liquid and it is to be understood that the subject methods are not limited to any particular liquid. In certain embodiments, the liquid may be a biological fluid. Liquids include sample liquids, where the term "sample" is broadly meant to refer to a material or mixture of materials in liquid form, containing, or at least suspected of containing, one or more analytes of interest. A sample may be any suitable sample, where a sample may be pre-processed, e.g., may be amplified, denatured, fractionated, etc., prior to introduction to a device. Representative samples may include, but are not limited to, biological fluids such as whole blood, plasma, interstitial fluid, cell suspensions, protein solutions, serum, urine, tears, etc., as well as non-biological fluids such as water, buffer and the like.

Contacting liquid may be accomplished in a number of ways which include manual, e.g., direct pipetting, etc., and semi- or completely automated techniques such as employing automated fluid reservoirs, pumps, automated robotic pipettes, and the like. In certain embodiments, liquid may be introduced to a pathway of a device through one or more ports of the device.

Liquid is flowed along a flow pathway until it reaches capillary passage 35, as described above. Capillary passage 35 may include hydrophobic region 50 and/or at least one stepped down junction 36. For ease of description only, the subject methods are described primarily with respect to valved capillary passage embodiments having a hydrophobic region and at least one stepped-down region, where such description is not intended to limit the subject invention.

Regardless of whether liquid is first introduced to passage 35 by way of inlet channel 30a or not, liquid moves through the device until it reaches capillary passage 35 where flow is stopped due to hydrophobic region 50 and junction 36.

Movement of liquid through the device may be accomplished in a number of different manners. For example, in embodiments where at least a portion of surface 20a and/or 40a is hydrophilic, the driving force for flow in the pathways may, in part, be due to capillary action. In embodiments in which surfaces are hydrophobic, other driving forces may be used to cause flow of liquid into the channels and passages. Other driving forces may include, but are not limited to, capillary forces, gravitational forces, centrifugal forces, force provided by way of pressurized gas, force provided by way of a pump, force applied to the sample at its source (e.g., force may be provided by pressure in dermal tissue such as in the case in which sample is interstitial fluid), etc.

Liquid continues to flow until it reaches hydrophobic region 50 and junction 36a of capillary passage 36, where it is prevented from further flow beyond the stepped-down junction 36 of valve 10, i.e., it is stopped prior to entering outlet 30b. Liquid flow may be continued passed this junction by increasing pressure (referred to as the burst pressure) of the liquid to a level greater than the backpressure provided by hydrophobic region 50 and stepped-down junction 36 at the interface between the capillary passage 35 and outlet channel 30b.

The amount of pressure required to initiate flow will vary depending on the particular dimensions of capillary passage 35 and outlet channel 30b. For example, in embodiments having a width of the capillary passage of dimensions of about 100 micrometers and a height of about 100 micrometers, the amount of burst pressure required to initiate flow of a volume of liquid past the capillary passage may be about 20 kPa (20 x 10³ Pascal, i.e., Newton per m², i.e., about 20 mBar). This burst pressure may be provided by any suitable method, such as any of the methods described above. In many embodiments, burst pressure follows directly from (i.e., is provided by) the dimensions of the resulting meniscus, which follows from the cross-sectional area of the capillary section. As noted above, certain embodiments include junctions that have sharp edges (see Fig. 4). In such embodiments, the flow of the liquid may be modulated in a manner analogous to that described above. Liquid may be applied to inlet channel 30a (if present), which liquid then flows through capillary passage 35, and stops at the interface between capillary passage 35 and outlet channel 30b, at sharp edges 80. To initiate flow, pressure applied to the liquid is increased to a level greater than the backpressure at the interface. In this way, flow is initiated beyond the interface and sharp edges 80.

In general the burst pressure required depends inversely on the dimension of the resulting meniscus in the capillary section. In the case of a square cross-section, the width determines this pressure (20 mBar for a 100micrometer as example, increasing to 40 mBar for a width of 50 micrometer etc.) In the case of a rectangular cross-section, the smallest dimension tends to determine the burst pressure and this is particularly relevant for certain geometries, e.g., devices of Figs. 1-7. As an example, the burst pressure for a 500 micrometer-wide, 100 micrometer-high capillary section, may be in the order of about 20 mBar, and again this inversely scales with height.

As noted above, certain embodiments include capillary passageways that are provided by wall forming member 55, e.g., present on surface 40a of substrate 40 (see Figs. 5, 6 and 7). In such embodiments, the flow of the liquid may be modulated in a manner analogous to that described above. Liquid may be applied to inlet channel 30a (if present), which liquid then flows through capillary passage 35, and stops at the interface between capillary passage 35 and outlet channel 30b. To initiate flow, pressure applied to the liquid is increased to a level greater than the backpressure at the interface. In this way flow is initiated beyond the interface.

Embodiments of the subject methods may also include one or more liquid processing steps, as described above. For example, embodiments may include analyte determination assays such as assays for determining the presence of and/or concentration of one or more analytes in the liquid, *e.g.*, glucose. This may be done in any suitable flow pathway of the device, including, but not limited to, capillary passage 35, inlet channel 30a, outlet channel 30b, or upstream or down stream from these features.

### KITS

Finally, novel kits are also provided. Kit embodiments may include at a device having one or more flow modulation pathways. For example, a kit may include one or more microfluidic devices that include one or more flow modulation pathways.

Embodiments may also include one or more components for processing a liquid using a device that includes one or more flow modulation pathways.

The subject kits may further include an element for obtaining a physiological sample from a subject. For example, where the physiological sample is blood or interstitial fluid, the subject kits may further include an element for obtaining a blood sample or interstitial fluid sample, such as a lance or microneedle for sticking a finger, a lance actuation element, and the like.

The subject kits may also include written instructions for using a device having one or more flow modulation pathways. Instructions of a kit may be printed on a substrate, such as paper or plastic, etc. As such, the instructions may be present in the kits as a package insert, in the labeling of the container of the kit or components thereof (i.e., associated with the packaging or sub-packaging) etc. In other embodiments, the instructions are present as an electronic storage data file present on a suitable computer readable storage medium, e.g., CD-ROM, diskette, etc. In yet other embodiments, the actual instructions are not present in the kit, but means for obtaining the instructions from a remote source, e.g. via the Internet, are provided. An example of this embodiment is a kit that includes a web address where the instructions can be viewed and/or from which the instructions can be downloaded. As with the instructions, this means for obtaining the instructions is recorded on a suitable substrate.

In certain embodiments of the subject kits, the components of a subject kit may be packaged in a kit containment element to make a single, easily handled unit, where the kit containment element, e.g., box or analogous structure, may or may not be an airtight container, e.g., to further preserve the integrity (e.g., sterility) of one or more components until use.

It is evident from the above results and discussion that the above described invention provides devices and methods for modulating a liquid in a flow path. Embodiments of the subject invention provides for a number of advantages including, but not limited to one or more of, ease of use, versatility with a variety of different applications, and the ability to modulate (e.g., repeatedly) the flow of a liquid is a liquid pathway circuit. As such, the subject invention represents a significant contribution to the art.

All publications and patents cited in this specification are herein incorporated by reference as if each individual publication or patent were specifically and individually indicated to be incorporated by reference. The citation of any publication is for its disclosure prior to the filing date and should not be construed as an admission that the present invention is not entitled to antedate such publication by virtue of prior invention.

While the present invention has been described with reference to the specific embodiments thereof, it should be understood by those skilled in the art that various changes may be made and equivalents may be substituted without departing from the true spirit and scope of the invention. In addition, many modifications may be made to adapt a particular situation, material, composition of matter, process, process step or steps, to the objective, spirit and scope of the present invention. All such modifications are intended to be within the scope of the claims appended hereto.

## Claims

1. A device comprising a flow modulation pathway having a hydrophobic region in contact with a capillary passage comprising at least one stepped-down junction.

2. The device of claim 1, wherein said capillary passage is formed by a first substrate and a second substrate.

3. The device of claim 1, wherein said capillary pathway is formed by a trench in at least one of said substrates.

4. The device of claim 1, wherein said capillary passage is formed by wall-forming members present between said first and second substrates.

5. The device of claim 4, wherein said wall-forming members are adhesive.

6. The device of claim 2, wherein said hydrophobic region is present on a surface of at least one of said substrates.

7. The device of claim 6, wherein said hydrophobic region is present on a surface of only one of said substrates.

8. The device of claim 1, wherein the width of said hydrophobic region is at least as great as the width of said capillary passage.

9. The device of claim 1, wherein the length of said hydrophobic region is at least as great as the length of said capillary passage.

10. The device of claim 1, wherein said hydrophobic region is a hydrophobic ink.

11. The device of claim 1, wherein said capillary passage is positioned between a liquid inlet channel and a liquid outlet channel.

12. The device of claim 11, wherein at least one stepped-down junction is present between said capillary passage and said liquid outlet channel.

13. The device of any of the preceding claims, further comprising a reaction chamber for determining at least one of: the presence of an analyte in a liquid applied to said device and the concentration of an analyte in a liquid applied to said device.
